# EUROPEAN PATENT SPECIFICATION

(11) **EP 2 081 775 B1**
(45) Date of publication and mention of the grant of the patent: **07.09.2011**
(21) Application number: 07802259.7
(22) Date of filing: 11.09.2007
(51) Int. Cl.: B42D 15/10

(54) **METHOD FOR PRODUCING A DATA CARRIER AND DATA CARRIER PRODUCED THEREFROM**
VERFAHREN ZUR HERSTELLUNG EINES DATENTRÄGERS UND DADURCH HERGESTELLTER DATENTRÄGER
MÉTHODE POUR LA FABRICATION D'UN SUPPORT DE DONNÉES ET LE SUPPORT DE DONNÉES PRODUIT PAR LA MÉTHODE

(30) Priority: 11.10.2006 EP 06021347
(43) Date of publication of application: 29.07.2009
(73) Proprietor: Gemalto Oy, 01740 Vantaa (FI)
(72) Inventor: SYRJANEN, Taru, FIN-01740 Vantaa (FI)
(74) Representative: Cassagne, Philippe M.J.
(86) International application number: PCT/EP2007/007902
(87) International publication number: WO 2008/043418

(56) References cited:
- EP-A- 1 698 485
- EP-A2- 0 012 375
- WO-A-93/16445
- WO-A-03/095218
- FR-A- 2 605 935

## Description

### BACKGROUND

This invention relates generally to a data carrier and a method for making the data carrier. More particularly, this invention relates to a data carrier having a see-through portion and a method for making such a data carrier.

Data carriers, such as driving licenses, identity cards, membership cards, badges or passes, passports, discount cards, banking cards, money cards, multi-application cards, and other papers of value; and security documents such as bank notes are widely used. Because of the value and importance associated with each of these data carriers, they are often the subject of unauthorized copying and alterations, and forgeries.

To prevent such activities from being carried out on these data carriers, different types of visual and touchable security features have been added to data carriers. One of these security features is a clear or see-through window through the body of a data carrier. However, known methods for producing such a see-through window suffer respective disadvantages.

One prior art method of making a card with a see-through window involves printing white ink on a surface of a transparent core layer, leaving an unprinted area for defining a see-through window. The method further includes laminating the printed surface of the transparent core layer with a protective layer. The white ink causes lamination problems because it prevents molecular bonding between the transparent core layer and the protective layer. This lamination problem is most evident if both the transparent core layer and protective layer are polycarbonate layers.

Another prior art method of making a card with a see-through window involves creating an orifice in an opaque layer and sandwiching the opaque layer between two transparent layers to create a see-through window through the two transparent layers. The orifice between the two transparent layers weakens the structure of the card, especially when the orifice is large in size.

A further prior art method of making such a card involves making an orifice in each of a pair of opaque layers. The pair of opaque layers are laminated onto opposite sides of a transparent layer with the orifices aligned to form a see-through window. Lamination causes smearing of the opaque layer onto the transparent layer at the edges defining the orifice. This smearing results in the edge of the see-through window being ill-defined.

A yet further prior art method of making such a card includes creating an orifice in an opaque white core layer, and filling the orifice with transparent plastic to define a see-through window in the opaque layer. Such a process is cumbersome and it is difficult to obtain a window surface that is planar with the surface of the opaque layer.

It is therefore desirable to have a simple and cost-effective method for producing a data carrier, such as a card, with a see-through window whose edge is more clearly defined.

WO 03/095218 also shows the state of the art.

### SUMMARY

According to an aspect of the present invention, there is provided a method for producing a data carrier with a see-through portion. The method includes applying a layer of separation material to a surface of one of an at least translucent layer and a backing layer, and fixedly attaching the other of the translucent layer and the backing layer to that surface of the layer. The backing layer may be less translucent than the translucent layer. In other words, less light passes through the backing layer than the translucent layer. The backing layer may be an opaque layer. The separation material prevents a part of the backing layer abutting it from being completely fixedly attached to the translucent layer. The method further includes removing at least a portion of the backing layer abutting the separation material to uncover a portion of the translucent layer adjacent the portion of the backing layer. The uncovered portion of the translucent layer defines a see-through portion of the data carrier. Fixedly attaching may include, but not limited to, laminating or bonding the backing layer to the translucent layer with the separation material therebetween preventing the complete lamination of portions of the two layers flanking the separation material. The translucent layer may or may not be laser markable.

According to some embodiments, the method further includes at least partially removing the separation layer that is exposed on the translucent layer after the portion of the backing layer abutting the separation layer has been removed. In other words, the separation layer may be partially or completely removed. According to one embodiment, the separation layer may be a layer of ink or other chemical. In such a case, the separation layer can be removed by flushing it away. In one embodiment, the separation layer may be applied to the backing layer to cover the portion of the backing layer to be removed. This separation layer adheres only to the backing layer and is removed together with the portion of the backing layer. In such a case, no additional removal of a substantial portion of the separation layer is necessary; only a remnant of the separation material is left at an interface of the backing layer and the translucent layer. In another embodiment, the separation layer is a layer of clear lacquer or varnish applied to the translucent layer. Since this separation layer is clear, it can be left on the surface of the translucent layer without it needing to be removed.

According to some embodiments, removing a portion of the backing layer abutting the separation material includes punching through the backing layer using a suitable punch. The punch has a ringed cutting edge that separates a portion of the backing layer from the rest of the backing layer. The separated portion of the backing layer, which is not fixedly attached to the translucent layer because of the seperation material thereunder, can then be removed, for example, by vacuum suction. Alternatively, according to other embodiments, removing a portion of the backing layer abutting the separation material includes cutting through the backing layer along an outline of the backing layer portion using a laser beam. The portion of the backing layer that is not fixedly attached to the translucent layer may similarly be removed from the data carrier by vacuum suction. As a further example, the backing layer portion may be removed by milling.

According to some embodiments, the removed portion from the backing layer results in an orifice in the backing layer. According to other embodiments, the removed portion includes a portion along the border of the backing layer. According to some of these embodiments, the removed portion is a ring shaped portion surrounding the border of the backing layer. In the case when the removed portion is at the border of the backing layer, the separated portion can be peeled off.

According to another aspect of the invention, there is provided a data carrier that is made according to the above-described method. Generally, the data carrier includes an at least translucent layer having an inner surface and a backing layer having an inner surface. The inner surface of the backing layer is fixedly attached to the inner surface of the translucent layer to define an interface thereat. At least a portion of the translucent layer is not covered by the backing layer. This uncovered portion of the translucent layer defines a see-through portion of the data carrier. At least a portion of one of the inner surfaces immediately adjacent the see-through portion is offset from the interface to define a recess thereat. In some embodiments, the data carrier may further include separation material in the recess. In some of these embodiments, the data carrier further includes separation material at the see-through portion.

According to some embodiments, the uncovered portion of the translucent layer is defined by an orifice in the backing layer. The orifice has a uniform cross-section throughout the length of the orifice. The cross-section may be of any regular or irregular shape. The axis of the orifice may be oblique or perpendicular to the interface. The uncovered portion may be ring-shaped. This ringed-shaped uncovered portion may be at the border of the translucent layer.

According to some embodiments, the at least translucent layer may be a transparent layer. The translucent layer and the backing layer may be thermally bonded together without the use of any adhesive. The translucent layer and the backing layer may be polycarbonates layers.

Other aspects and advantages of the invention will become apparent from the following detailed description, taken in conjunction with the accompanying drawings, illustrating by way of example the principles of the invention.

### BRIEF DESCRIPTION OF DRAWINGS

The invention will be better understood with reference to the drawings, in which:
Figure 1 is a flow diagram showing a sequence of steps, according to an embodiment of the invention, for producing a data carrier with a see-through window;
Figures 2A-2F are cross-sectional drawings of a data carrier at different stages of being produced using the sequence in Figure 1;
Figure 3A is a drawing showing an enlarged version of the data carrier in Figure 2F, with the partial removal of a separation layer thereof;
Figure 3B is a drawing similar to Figure 3A, with the complete removal of the separation layer;
Figure 4 is an isometric drawing of the completed data carrier in Figure 2 as viewed in the direction of arrow A in Figure 2F; and
Figure 5 is an isometric drawing of another data carrier with a different see-through portion that may be produced using the sequence in Figure 1.

### DETAILED DESCRIPTION

As shown in the drawings for purposes of illustration, the invention is embodied in a method of producing a data carrier with a see-through portion and a data carrier produced using the method. The data carrier includes a transparent layer and an opaque backing layer. The method includes applying a layer of separation material to a part of a surface of the transparent layer or the opaque layer. Next, the other layer of the transparent layer and the opaque layer is fixedly attached to that surface. With the separation material between the opaque layer and the transparent layer, a corresponding part of the opaque layer is prevented from being completely fixedly attached to the transparent layer. Next, at least one portion of the opaque layer abutting the separation material that is not completely fixedly attached to the transparent layer is removed to uncover a portion of the transparent layer adjacent the portion of the opaque layer. The uncovered portion of the translucent layer defines a see-through portion of the data carrier.

Hereafter, an embodiment of the present invention will be described in the context of an identity (ID) card with a see-through window and a method for producing it. However, it is to be understood that the invention is usable with any data carrier that includes at least one see-through portion. Such a data carrier includes, but is not limited to, a driving license, a badge or pass, a passport, a discount card, a membership card, a banking card, a credit card, a money card, a multi-application card, and other security documents and papers of value that are to be provided with information or data in such a way that they cannot be easily imitated by common means.

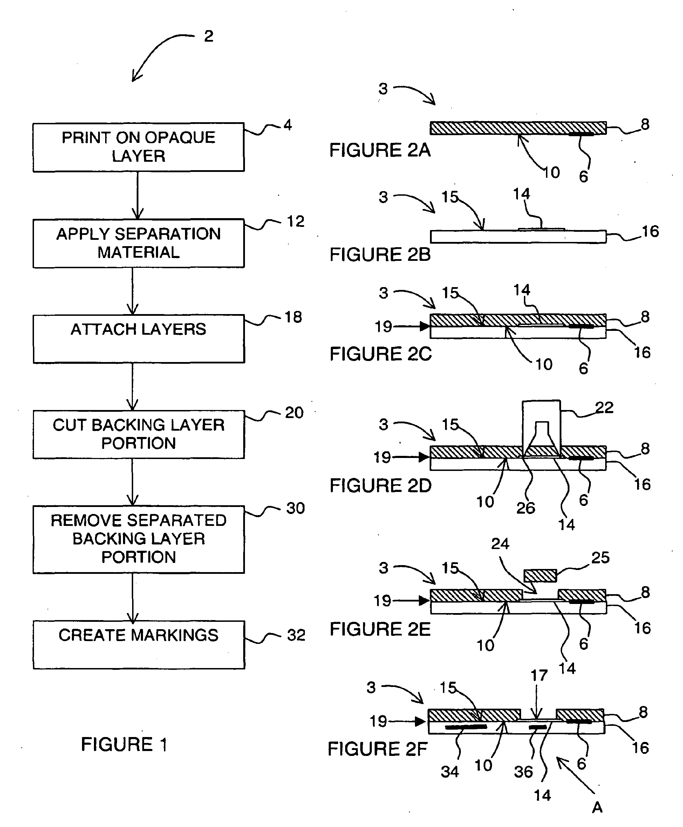

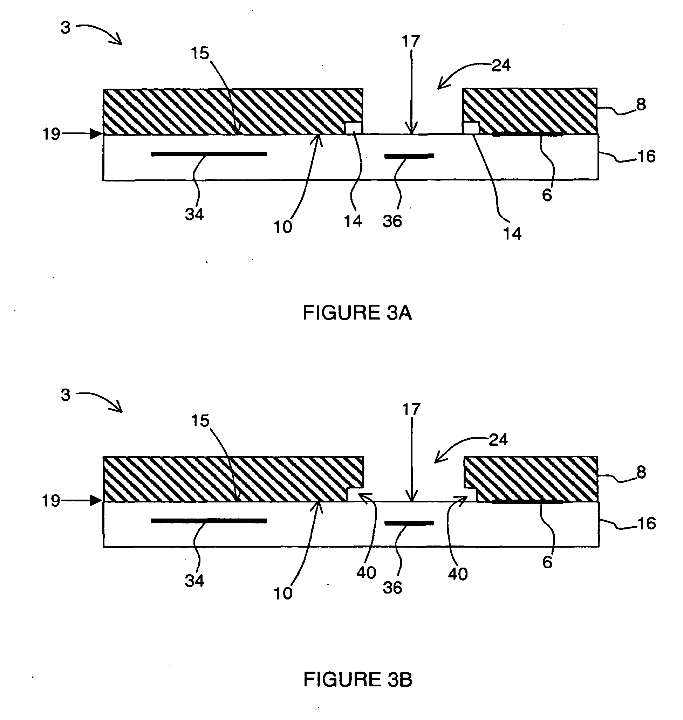

Figure 1 shows a sequence 2 of steps for producing an identity (ID) card 3 (a completed card is shown in Figure 3). The sequence 2 starts in a PRINT ON OPAQUE LAYER step 4. In this PRINT ON OPAQUE LAYER step 4, non-personalized information 6 is printed on an inner surface 10 of an opaque layer 8 fabricated of plastic film materials customary in card application, such as Polycarbonate (PC), Polyethylene terephthalate (PET) and Polyvinyl chloride PVC, etc. This non-personalized information 6 may include, but not limited to, a serial number and a national or department emblem or initials. Figure 2A shows the opaque layer 8 with the non-personalized information 6 printed on the inner surface 10 of the opaque layer 8.

Next the sequence 2 proceeds to an APPLY SEPARATION MATERIAL step 12. In this step 12, separation material 14 is applied to a part of an inner surface of 15 of a transparent layer 16 for forming a see-through window 17 (Figure 2F) of the data carrier 3. The separation material 14 includes, but is not limited to, clear varnish/lacquer with or without additive, UV curable printing ink, and other suitable materials that can prevent the complete fixed attachment of the opaque layer 8 to the transparent layer 16. The transparent layer 16 may be a laser-markable layer fabricated of clear polycarbonate with carbon particles therein. Other materials, such as PET and PVC may also be used so long as they are able to absorb the energy of a laser beam for creating a marking thereat. Figure 2B shows the transparent layer 16 with the separation material 14 applied on a part of the inner surface 15 thereof. The separation material 14 may however be applied to the opaque layer 8 instead.

The sequence 2 next proceeds to an ATTACH LAYERS step 18, wherein the opaque layer 8 is brought into contact with the transparent layer 16. In doing so, the printed inner surface 10 of the opaque layer 8 abuts the inner surface 15 of the transparent layer 16 to define an interface 19 thereat. The two layers 8, 16 are fixedly attached to each other using for example thermal bonding, ultra-sonic bonding or the like. The separation material 14 prevents the complete fixed attachment of the inner surfaces 10, 15 abutting the separation material 14 to each other. In this embodiment, the inner surface 10 of the opaque layer 8 is offset from the interface 19 after attachment to the transparent layer 16. Detachment of this transparent layer 16 after it has been fixedly attached to the opaque layer 8 is likely to damage the printed information on the opaque layer 8. Figure 2C shows the opaque layer 8 fixedly attached to the transparent layer 16.

The sequence 2 next proceeds to a CUT OPAQUE LAYER PORTION step 20, wherein a punch 22 is used to create an orifice 24 (Figure 2E) in the opaque layer 8. The data carrier 3 is brought under the punch 22 with a portion 25 (Figure 2E) of the opaque layer 8 abutting the separation material 14 directly facing a cutting edge 26 of the punch 22. The punch 22 is brought towards and pressed against the opaque layer 8 until the cutting edge 26 penetrates the opaque layer 8 to reach the separation material 14. The punch 22 is that moved away from the opaque layer 8 to leave the portion 25 of the opaque layer 8 separated from the rest of the opaque layer 8. The separated portion 25 is circular in shape in this embodiment. However, the separated portion 25 may be of any other regular shapes, such as, rectangular, oval, diamond etc. or any irregular shape. Alternatively, the separated portion 25 may be annular in shape. Figure 2D shows the opaque layer 8 cut using the punch 22 to separate the opaque layer portion 25 from the rest of the opaque layer 8.

The sequence 2 next proceeds to a REMOVE SEPARATED OPAQUE LAYER PORTION step 30, wherein the separated opaque layer portion 25 is removed, for example by vacuum suction. Figure 2E shows the separated portion 25 of the opaque layer 8 removed from the data carrier 3 leaving the orifice 24 in the opaque layer 8. The orifice 24 has a uniform cross-section throughout the length of the orifice 24. The orifice 24 also has an axis that is oblique or perpendicular to the interface 19. In this data carrier 3, a portion of the opaque layer 8 inner surface 10 immediately adjacent the see-through window 17 is offset from the interface 19. It is possible that a portion of the inner surface 15 of the transparent layer 16 opposing the offset portion of the opaque layer 8 inner surface 10 be similarly offset from the interface 19. Since the part of the opaque layer 8 from which the opaque layer portion 25 is cut is separated from the transparent layer 16 by the separation material 14, little or no smearing will occur at the edge of the window 17 when the two layers 8, 16 are attached.

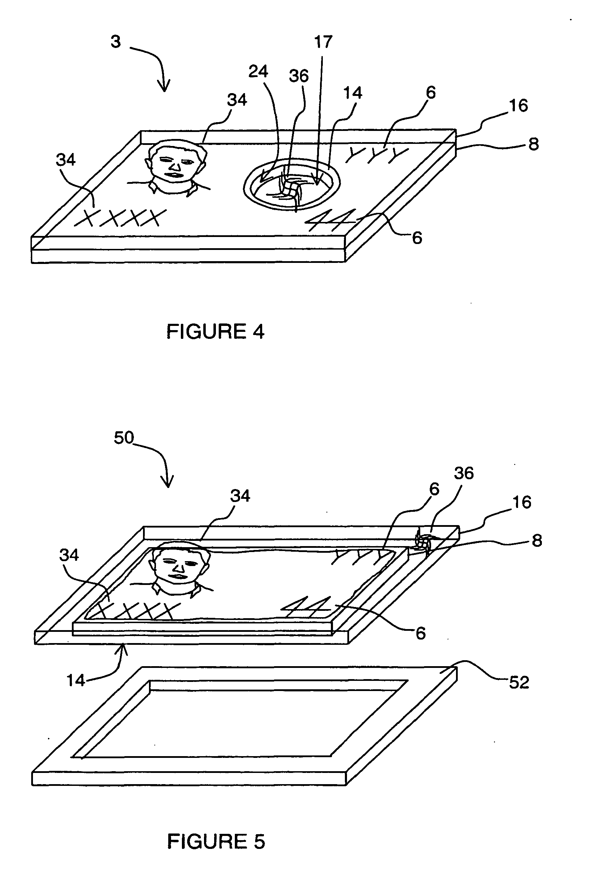

The sequence 2 next ends in a CREATE MARKINGS step 32 for creating markings at the transparent layer 16, wherein a laser beam (not shown) is irradiated to create markings 34 at the transparent layer 16. These markings 34 may include, but is not limited to, personalized information and data, such as name, date of birth, address, personnel number, signature, portrait, etc. These markings 34 are created at portions of the transparent layer 16 that are backed by the opaque layer 8, which aids legibility of the markings 34. A security feature 36 is also created at the window 17 of the transparent layer 16. These markings 34, 36 may be created on an outer surface of the inner surface 15 of the transparent layer 16 or within the volume of the transparent layer 16. Figures 2F and 4 show the completed ID card 3. In this embodiment, the separation material 14 is not removed from the data carrier 3. However, it is possible for the separation material 14 to be partially removed from the window 17 to leave a remnant thereof at the interface 19 surrounding the window 17 as shown in Figure 3A. Alternatively, the separation material 14 may be at least substantially removed to reveal a recess 40 defined by the portion of the opaque layer 8 inner surface 10 that is offset from the interface 19 as shown in Figure 3B.

Figure 5 shows an ID card 50 according to another embodiment of the invention. Instead of having an orifice 24 cut in the opaque layer 8, an annular or ring-shaped portion 52 at the border of the opaque layer 8 is removed to define a similarly shaped see-through portion at the border of the ID card 50.

Advantageously, the edge of the see-through window is clean and clearly defined. Unlike the prior art, the possibility of smearing of the opaque layer onto the transparent layer defining the see-through window is reduced. The ID card with such a see-through window is thus more visually appealing and substantially protected against forgery.

Although the present invention is described as implemented in the above-described embodiment, it is not to be construed to be limited as such. Other materials, for example, papers or plastic materials, such as photographic papers, passes, documents, value-bearing papers, checks, etc. may also be used as the opaque layer.

As another example, the non-personalized information and data that is described to be printed on the opaque layer may also be laser marked together with the personalized information/data at the transparent layer. It is also possible that the non-personalized information and data be printed on the inner surface of the transparent layer. Alternatively, the information and data may be printed or marked on one or both of the outer surfaces of the two-layer structure. The non-personalized information and data may also include company logos, insignias of rank, etc. The personalized information and data may also include a fingerprint and an iris scan.

As yet another example, the transparent layer may also be a transparent sheet of coating including pigments sensitive to the laser or made up of several superimposed layers of different coloured pigments.

Additional layers may also be added to the two-layer ID card 3 described above. For example, a second opaque layer may be fixedly attached to the outward facing surface of the transparent layer to form a three-layer ID card. This second opaque layer has an orifice which is aligned with the orifice of the first opaque layer. The orifice in the second layer may be formed in the same manner as that described above for forming the orifice in the first layer. For such a three-layer ID card, the non-personalized and personalized information would have to be marked on an outer surface of at least one of the two opaque layers, using for example direct printing. As another example, the two-layer ID card and the three-layer ID card may also be laminated on one or both sides with respective protective layers to protect the ID card from environmental influences, mechanical damage and abrasion, or alteration. There are several ways of laminating the protective layers. The protective layers may be laminated together with the other layers before the orifice or orifices are created as described above to obtain a see-through window with an edge that is clean and clearly defined. Alternatively, the protective layers may be laminated onto the respective opaque layers after the orifices are formed without encroaching on the edge of the orifices. The protective layers may be laminated using any suitable lamination means including, but not limited to, cold lamination. The protective layers may also be bonded to the respective opaque layers using any suitable adhesive. For ID cards with such a protective layer, the information may be applied to a surface of the protective layer that comes into contact with the two-layer or three-layer structure. The information may be applied using a printing technology known as dye sublimation printing, referred commonly to in the industry as D2T2.

## Claims

1. A method for producing a data carrier having a backing layer and an at least translucent layer, the method comprising:
fixedly attaching the backing layer to the translucent layer;
**characterized in that** the method further comprises:
applying a layer of separation material to a surface of one of the translucent layer and the backing layer prior to fixedly attaching the other of the transparent layer and the backing layer to the surface of the layer, the separation material being for preventing a part of the backing layer abutting the separation material from being completely fixedly attached to the translucent layer; and
removing at least a portion of the backing layer abutting the separation material to uncover a portion of the translucent layer adjacent the portion of the backing layer.

2. A method according to Claim 1, **characterized in that** the method further comprises removing the separation material from the surface of the translucent layer after the backing layer portion abutting the separation material has been removed.

3. A method according to Claim 1, **characterized in that** removing a portion of the backing layer abutting the separation material comprises one of:
punching through the backing layer to separate the portion of the backing layer from the rest of the backing layer;
cutting the backing layer using a laser beam to separate the portion of the backing layer from the rest of the backing layer; and
milling the backing layer.

4. A method according to any one of Claims 1-3, **characterized in that** the removed backing layer portion results in an orifice in the backing layer.

5. A method according to any one of Claims 1-3, **characterized in that** the removed backing layer portion comprises a portion along the boundary of the backing layer.

6. A method according to Claim 5, **characterized in that** the removed backing layer portion is a ring shaped portion at the border of the backing layer.

7. A data carrier comprising:
an at least translucent layer having an inner surface;
a backing layer having an inner surface that is fixedly attached to the inner surface of the translucent layer to define an interface thereat; and
at least a portion of the translucent layer is not covered by the backing layer, the uncovered portion defining a see-through portion of the data carrier;
**characterized in that**
at least a portion of one of the inner surfaces immediately adjacent the see-through portion is offset from the interface to define a recess thereat.

8. A data carrier according to Claim 7, **characterized in that** the data carrier further comprises separation material in the recess.

9. A data carrier according to Claim 8, **characterized in that** the data carrier further comprises separation material at the see-through portion.

10. A data carrier according to any one of Claims 7-9, **characterized in that** the uncovered portion is defined by an orifice in the backing layer.

11. A data carrier according to Claim 10, **characterized in that** the orifice is of a uniform cross-section throughout the length of the orifice.

12. A data carrier according to Claim 11, **characterized in** the orifice has an axis that is oblique or perpendicular to the interface.

13. A data carrier according to any one of Claims 7-9, **characterized in that** the uncovered portion is ring-shaped.

14. A data carrier according to Claim 13, **characterized in that** the uncovered portion is at the border of the translucent layer.

15. A data carrier according to any one of Claims 7-14, **characterized in that** the at least translucent layer comprises a transparent layer.

16. A data carrier according to any one of Claims 7-15, **characterized in that** the translucent layer and the backing layer are thermally bonded together without the use of any adhesive.

17. A data carrier according to any one of Claims 7-16, **characterized in that** the translucent layer and the backing layer comprises polycarbonate layers.

## Patentansprüche

1. Ein Verfahren zur Herstellung eines Datenträgers mit einer Trägerschicht und einer zumindest lichtdurchlässigen Schicht, wobei das Verfahren Folgendes umfasst:
eine unbewegliche Verbindung der Trägerschicht mit der lichtdurchlässigen Schicht;
**dadurch gekennzeichnet, dass** das Verfahren weiterhin Folgendes beinhaltet:
Anwendung einer Schicht Trennmaterial auf die Oberfläche der lichtdurchlässigen Schicht und der Trägerschicht, bevor die andere transparente Schicht und die Trägerschicht unbeweglich mit der Oberfläche der Schicht verbunden werden, wobei das Trennmaterial verhindern soll, dass ein Teil der Trägerschicht, der an das Trennmaterial angrenzt, vollständig mit der lichtdurchlässigen Schicht unbeweglich verbunden wird; und
Entfernung von zumindest einem Teil der Trägerschicht, die an das Trennmaterial angrenzt, um einen Teil der lichtdurchlässigen Schicht freizulegen, die an den Teil der Trägerschicht angrenzt.

2. Ein Verfahren gemäß Anspruch 1, **dadurch gekennzeichnet, dass** das Verfahren weiterhin die Entfernung des Trennmaterials von der Oberfläche der lichtdurchlässigen Schicht beinhaltet, nachdem ein Teil der Trägerschicht, der an das Trennmaterial angrenzt, entfernt wurde.

3. Ein Verfahren gemäß Anspruch 1, **dadurch gekennzeichnet, dass** die Entfernung eines Teils der Trägerschicht, die an das Trennmaterial angrenzt, eines der Folgenden beinhaltet:
Ausstanzen der Trägerschicht, um den Teil der Trägerschicht vom Rest der Trägerschicht zu trennen;
Ausschneiden der Trägerschicht mithilfe eines Laserstrahls, um den Teil der Trägerschicht vom Rest der Trägerschicht zu trennen; und
Abfräsen der Trägerschicht

4. Ein Verfahren gemäß einem der Ansprüche 1-3, **dadurch gekennzeichnet, dass** der entfernte Teil der Trägerschicht zu einer Öffnung in der Trägerschicht führt.

5. Ein Verfahren nach einem der Ansprüche 1-3, **dadurch gekennzeichnet, dass** der entfernte Teil der Trägerschicht einen Teil entlang der Grenze der Trägerschicht enthält.

6. Ein Verfahren gemäß Anspruch 5, **dadurch gekennzeichnet, dass** der entfernte Teil der Trägerschicht ein ringförmiger Teil an der Grenze der Trägerschicht ist.

7. Ein Datenträger, der Folgendes beinhaltet:
eine zumindest lichtdurchlässige Schicht mit einer inneren Oberfläche:
eine Trägerschicht mit einer inneren Oberfläche, die unbeweglich mit der inneren Oberfläche der lichtdurchlässigen Schicht verbunden ist, um dort eine Schnittstelle zu bilden und
mindestens ein Teil der lichtdurchlässigen Schicht ist nicht von der Trägerschicht bedeckt, wobei der unbedeckte Teil einen durchsichtigen Teil des Datenträgers darstellt; **dadurch gekennzeichnet, dass**
mindestens ein Teil einer der inneren Oberflächen, die direkt an den durchsichtigen Teil angrenzen, zur Schnittstelle versetzt ist und somit dort eine Aussparung bildet.

8. Ein Datenträger gemäß Anspruch 7, **dadurch gekennzeichnet, dass** der Datenträger in der Aussparung Trennmaterial enthält.

9. Ein Datenträger gemäß Anspruch 8, **dadurch gekennzeichnet, dass** der Datenträger weiterhin Trennmaterial in dem durchsichtigen Teil enthält.

10. Ein Datenträger gemäß einem der Ansprüche 7-9, **dadurch gekennzeichnet, dass** der unbedeckte Teil durch eine Öffnung in der Trägerschicht definiert wird.

11. Ein Datenträger gemäß Anspruch 10, **dadurch gekennzeichnet, dass** in der Öffnung ein gleichmäßiger Querschnitt über die Länge der Öffnung besteht.

12. Ein Datenträger gemäß Anspruch 11, **dadurch gekennzeichnet, dass** die Öffnung über eine Achse verfügt, die schräg oder senkrecht zur Schnittstelle ist.

13. Ein Datenträger gemäß einem der Ansprüche 7-9, **dadurch gekennzeichnet, dass** der unbedeckte Teil ringförmig ist.

14. Ein Datenträger gemäß Anspruch 13, **dadurch gekennzeichnet, dass** der unbedeckte Teil sich am Rand der lichtdurchlässigen Schicht befindet.

15. Ein Datenträger gemäß einem der Ansprüche 7-14, **dadurch gekennzeichnet, dass** die zumindest lichtdurchlässige Schicht eine transparente Schicht enthält.

16. Ein Datenträger gemäß einem der Ansprüche 7-15, **dadurch gekennzeichnet, dass** die lichtdurchlässige Schicht und die Trägerschicht ohne die Hilfe von Klebstoffen thermisch verbunden sind.

17. Ein Datenträger gemäß einem der Ansprüche 7-16, **dadurch gekennzeichnet, dass** die lichtdurchlässige Schicht und die Trägerschicht Polycarbonat-Schichten enthalten.

## Revendications

1. Procédé de production d'un support de données comportant une couche arrière et au moins une couche translucide, le procédé consistant à :
fixer fermement la couche arrière à la couche translucide ;
**caractérisé en ce que** le procédé consiste en outre à :
appliquer une couche de matériau de séparation à une surface de l'une de la couche translucide et de la couche arrière avant de fixer fermement l'autre de la couche translucide et de la couche arrière à la surface de la couche, le matériau de séparation servant à éviter qu'une partie de la couche arrière contiguë au matériau de séparation soit complètement fixée fermement à la couche translucide ; et
retirer au moins une partie de la couche arrière contiguë au matériau de séparation afin de découvrir une partie de la couche translucide adjacente à la partie de la couche arrière.

2. Procédé selon la revendication 1, **caractérisé en ce que** le procédé consiste en outre à retirer le matériau de séparation de la surface de la couche translucide après que la partie de couche arrière contiguë au matériau de séparation a été retirée.

3. Procédé selon la revendication 1, **caractérisé en ce que** le retrait d'une partie de la couche arrière contiguë au matériau de séparation comprend l'une des opérations suivantes :
découper à l'emporte-pièce à travers la couche arrière pour séparer la partie de la couche arrière du reste de la couche arrière ;
découper la couche arrière en utilisant un faisceau laser pour séparer la partie de la couche arrière du reste de la couche arrière ; et
fraiser la couche arrière.

4. Procédé selon l'une quelconque des revendications 1 à 3, **caractérisé en ce que** la partie de couche arrière retirée résulte en un orifice dans la couche arrière.

5. Procédé selon l'une quelconque des revendications 1 à 3, **caractérisé en ce que** la partie de couche arrière retirée comprend une partie le long de la frontière de la couche arrière.

6. Procédé selon la revendication 5, **caractérisé en ce que** la partie de couche arrière retirée est une partie de forme annulaire en bordure de la couche arrière.

7. Support de données comprenant :
au moins une couche translucide ayant une surface interne ;
une couche arrière ayant une surface intérieure qui est fixée fermement à la surface interne de la couche translucide pour y définir une interface ; et
au moins une partie de la couche translucide n'est pas couverte par la couche arrière, la partie non couverte définissant une partie transparente du support de données ;
**caractérisé en ce que** au moins une partie de l'une des surfaces internes immédiatement adjacente à la partie transparente est décalée de l'interface pour y définir un évidement.

8. Support de données selon la revendication 7, **caractérisé en ce que** le support de données comprend un matériau de séparation dans l'évidement.

9. Support de données selon la revendication 8, **caractérisé en ce que** le support de données comprend en outre un matériau de séparation au niveau de la partie transparente.

10. Support de données selon l'une quelconque des revendications 7 à 9, **caractérisé en ce que** la partie non couverte est définie par un orifice dans la couche arrière.

11. Support de données selon la revendication 10, **caractérisé en ce que** l'orifice a une section transversale uniforme sur toute la longueur de l'orifice.

12. Support de données selon la revendication 11, **caractérisé en ce que** l'orifice a un axe qui est oblique ou perpendiculaire à l'interface.

13. Support de données selon l'une quelconque des revendications 7 à 9, **caractérisé en ce que** la partie non couverte a une forme annulaire.

14. Support de données selon la revendication 13, **caractérisé en ce que** la partie non couverte se trouve au bord de la couche translucide.

15. Support de données selon l'une quelconque des revendications 7 à 14, **caractérisé en ce que** ladite au moins une couche translucide comprend une couche transparente.

16. Support de données selon l'une quelconque des revendications 7 à 15, **caractérisé en ce que** la couche translucide et la couche arrière sont liées thermiquement l'une à l'autre sans l'utilisation d'un quelconque adhésif.

17. Support de données selon l'une quelconque des revendications 7 à 16, **caractérisé en ce que** la couche translucide et la couche arrière comprennent des couches de polycarbonate.
